# EUROPEAN PATENT SPECIFICATION

(11) **EP 0 422 695 B1**
(45) Date of publication and mention of the grant of the patent: **15.03.1995**
(21) Application number: 90124001.0
(22) Date of filing: 11.07.1986
(51) Int. Cl.: E01F 9/08, G08G 1/09, G09F 13/22

(54) **A system comprising roadway marking strips**
Anlage mit Markierungsbändern für Verkehrsflächen
Système de bandes de signalisation routière

(30) Priority: 23.07.1985 CH 3197/85; 03.04.1986 CH 1294/86; 08.04.1986 CH 1360/86
(43) Date of publication of application: 17.04.1991
(62) Divisional of application: 86109507.3
(73) Proprietor: MINNESOTA MINING AND MANUFACTURING COMPANY, St. Paul, Minnesota 55133-3427 (US)
(72) Inventor: Eigenmann, Ludwig, Dr., CH-6900 Lugano (CH)
(74) Representative: Baillie, Iain Cameron

(56) References cited:
- EP-A- 0 144 458
- BE-A- 424 718
- DE-A- 2 005 751
- DE-A- 2 417 584
- DE-A- 2 527 877
- DE-A- 2 901 196
- DE-A- 3 031 246
- FR-A- 854 390
- FR-A- 2 340 410
- GB-A- 1 123 354
- GB-A- 2 081 485
- US-A- 3 836 275
- US-E- 31 291
- BATIR, vol. 149, no. XLIII, June 1966, Le Bâtiment, Paris, FR; "Nouveau système de signalisation urbaine"
- POLYTECHNISCH TIJDSCHRIFT, edition E, ELEKTROTECHNIEK-ELECTRONICA, vol. 28, no.5, 3rd July 1973, Star Tijdschriften, Rijswijk, NL; "Matrix-lichtbakken met glasvezeloptiek"

## Description

The problem of traffic safety, especially at night, has prompted a good deal of study and experimentation, a considerable contribution having also been made by the applicant, in the specific field of the horizontal road marking; that is that marking which is designed to supply the motorist with quick and accurate information regarding the aspects of the road - curves, intersections, deviations, obstacles, etc. - under all kinds of illumination and weather conditions.

In addition to numerous inventions regarding nighttime traffic safety, based on the use of retroreflecting elements, the applicant has also developed systems which incorporate their own light source. Under particularly foggy or misty conditions, the efficiency of such systems is superior to the systems using retroreflecting elements. These latter systems, however, have been made more and more efficient in recent years, also through developments made by the applicant.

The applicant has claimed the development of a marking strip that gives off its own light in its Italian Patents Nos. 982,743 and 990,780 and in the corresponding USA Patent No. 3,996,556. The light is produced by incandescent or fluorescent lamps or by luminous pigments activated by visible and even non-visible light.

On the one hand, however, these light sources are not very suited for sustaining the stress of traffic and, in addition, have rather short service lives when kept constantly lit, say, during the nighttime hours. On the other hand, there is also the consideration of the required current, especially in the light of having to use - in the practical case - storage batteries to supply this current.

A prior art that is of interest is that disclosed in DE-A-2 417 584 (see preamble of claim 1) in which a continuous base strip to be applied to the surface of a roadway is provided, said base strip having a series of protruding elements housing light emitting means. The strip includes a photosensitive device that detects the headlights of approaching vehicles and upon such detection serves to switch on the light emitting means of the strip. To conserve energy a time-delay device may be incorporated between the photosensitive device and an associated switch for switching on said lights.

A further prior art is that disclosed in FR-A-854 390 that proposes the installation in roadways, at locations controlled by traffic lights, of groups of lamps, the activation of said lamps being synchronized with the activation of the traffic lights.

Finally attention is directed to BATIR, volume 149, No. XLIII, Le Bátiment, Paris, FR; "Nouveau système de signalisation urbaine" in which there is disclosed a signalling system in which green, orange and red luminous bands are applied to roadways and activated by an associated command system.

The present invention is concerned with the provision of a system comprising a prefabricated luminous tape-like composite roadway marking material operating in association with traffic lights to improve traffic safety.

According to the system of the present invention a prefabricated tape-like composite roadway marking material for horizontal road-marking purposes, in the form of a composite marking strip, is provided and comprises in combination:
a continuous base strip to be applied to the surface of a roadway;
a series of transparent protruding elements located in predetermined positions distributed along said base strip, said protruding elements housing light emitting means;
a photosensitive device on said base strip;
the system being such that said photosensitive device receives light from a traffic signal by means of optical fibers to cause said light emitting means on said base strip to produce a colour corresponding to the colour of the traffic light.

The system may be such that said photosensitive device actuates a microswitch via an amplifier. The system may also be such that said microswitch, when closed, permits said light emitting means to be energized by an electrical power supply.

The system may also include a control switch comprising a timer to cause said light emitting means to operate in a blinking mode.

The light emitting means are preferably Light Emitting Diodes.

The base strip may include a photoelectric cell responsive to light beams from the headlights of oncoming motor vehicles, the arrangement being such that when said photoelectric cell is activated by said light beams it permits said light emitting means along said base strip to be energized.

Dealing first with the marking strip, this invention involves the use of a luminous marking strip applied to the roadway surface, which is not simply an improvement over the above-mentioned type but actually represents an important innovation that ingeniously combines the most up-to-date technical discoveries to achieve the objective. The invention proposes, most importantly, the use of Light Emitting Diodes (LEDs) for providing the light for the marking strip. When, for example, a 12-volt potential is applied to these appropriately "doped" semiconductors, they emit photons and become luminous and are visible over long distances during the nighttime hours. The amount of current drawn is very low as compared to the producing of the same amount of light by an incandescent lamp. The produced light can be more or less focused and, depending on the particular type of "doping" used, certain colors can be obtained. It was also unexpectedly found that LEDs are resistant to traffic vibrations, which are significant vibrations even if not very perceptibile to our physical senses.
The LEDs are distributed and appropriately spaced (indicatively but not necessarily at intervals of several tens of centimeters) along the marking strip, and contained inside of protruding transparent capsules imbedded in the marking strip itself, as shown more clearly in the diagram described further on.
This invention also provides for the use of filament or halogen type of microlamps for special applications - as described further on - which are powered by an external current source. As regards the current source, provision is made for all those cases to limit the amount of current required to the absolute minimum, the current being furnished either by photoelectric solar cells, a bank of storage batteries or - as mentioned previously - a standard electrical network.

In all cases, the characteristic which is common for all the variations of this invention is the ability of the luminous marking strip to be activated by the light coming from the headlights of the oncoming vehicle. In this case, the marking strip is activated on command when, and for the length of time, necessary. As defined in the accompanying Claim 1 a main feature of the present invention is that provision is also made for the marking strip to be activated by the traffic signal lights.
One of the very important possibilities offered by the luminous marking strip described in this invention is the possibility of providing differentiated roadmarking indications; for example, the use of different colored lights for signaling the presence of ice on the road.

In all the cases considered, provision is made for the combined use of retroreflecting elements for nighttime road-marking service, that can be particularly useful in an emergency situation where the main roadmarking devices - that are the object of this invention - do not illuminate due to the current being interrupted for any reason whatsoever.

The aforementioned retroreflecting elements could be of the type described in the applicant's USA Patents Nos. 4,072,403, 4,469,645 and R 31,291.

The different ways of applying this invention are described below with reference made to the following diagrams:
- Fig. 1, schematically showing the marking strip with the light sources applied to it, and the light-source activator which is sensitive to the lights from the headlights or the approaching motor vehicle.
- Fig.2, schematically showing the traffic-light-actuated luminous marking strip.
- Fig.3, representing the luminous marking strip applied along a curve.
- Fig.4, representing a luminous marking strip whose luminous elements are fed by current produced by solar cells and which has catadioptric prisms arranged next to the luminous elements.
- Fig.5, representing a non-limiting example of a circuit for realizing the arrangement illustrated in Fig. 4. This invention and the various alternatives will now be examined in detail, with references made to the above-mentioned diagrams.

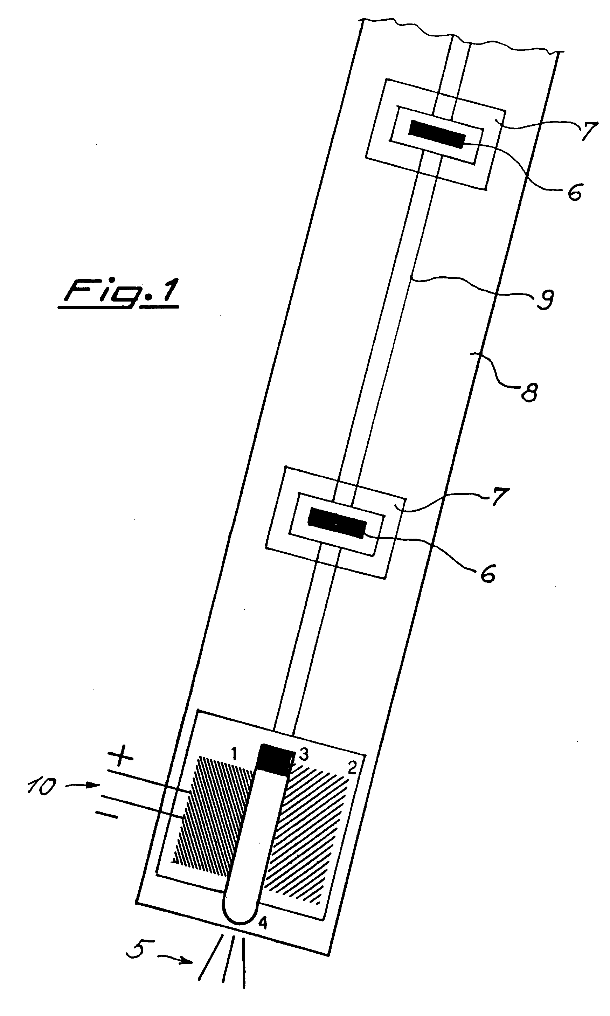

In Fig. 1, the microswitch (1) is actuated through the micro-amplifier (2) by the photoelectric cell (3); the microfocusing lens (4) has the function of concentrating the light beams (5), coming from the headlights of the oncoming motor vehicle, onto the photoelectric cell (3), and can be appropriately oriented to select a particular actuating beam of light.

When the photoelectric cell (3) causes the microswitch (1) to close, the current coming from the source (10) passes through the conductors (9) to the light sources (6) - which are, for example, LEDs - located inside the protruding transparent bodies (7) applied to the marking strip (8).
The conductors (9) can consist of a brass network and be immersed in the body or in the bonding material of the strip (8). The current source (10) can be a traditional current source or a photovoltaic cell and batteries, as we shall better describe further on.
As an alternative, light sources (6) having different colors can be provided, alternating red and green for example, with timers, or some other such means, being used to illuminate them at different times. In this event, there will be three conductions (9) instead of two.

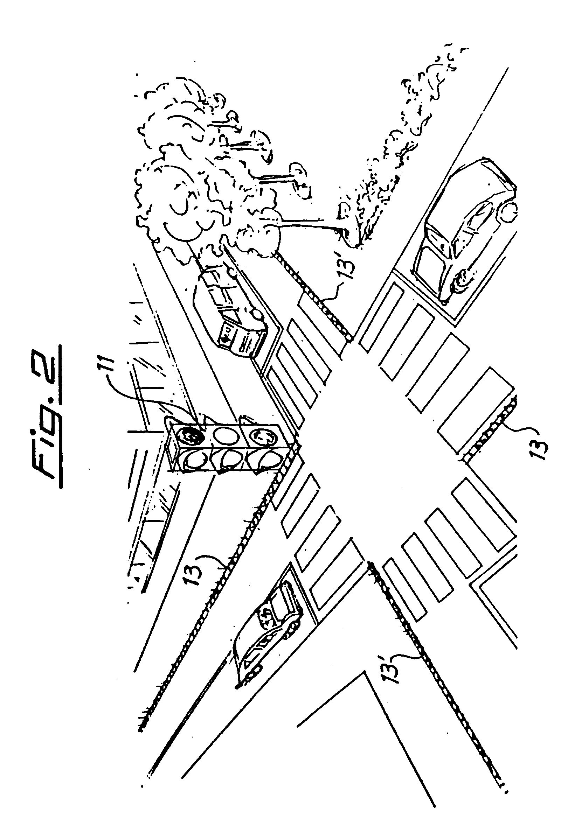

In Fig.2, the light from a traffic light (11) passes through optical fibers to groups of microamplifiers, photoelectric cells and microswitches - similar to those described above - which turns on the luminous sources located on the strips (13) and (13') producing a red or green color according to the particular color of the traffic light.

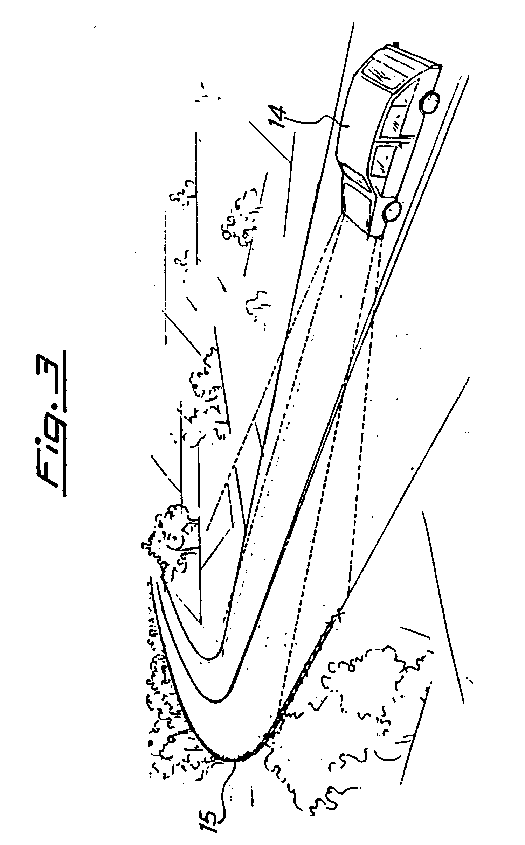

Fig. 3 shows another application of this invention. The head-light beams from vehicle (14) pass through devices similar to those described above and cause the light sources along the strip (15) to be turned on. The said light sources follow the curve of the road and thus show this curve to the driver of the oncoming motor vehicle.

This type of marking strip is especially useful at stop lights when there is fog present.

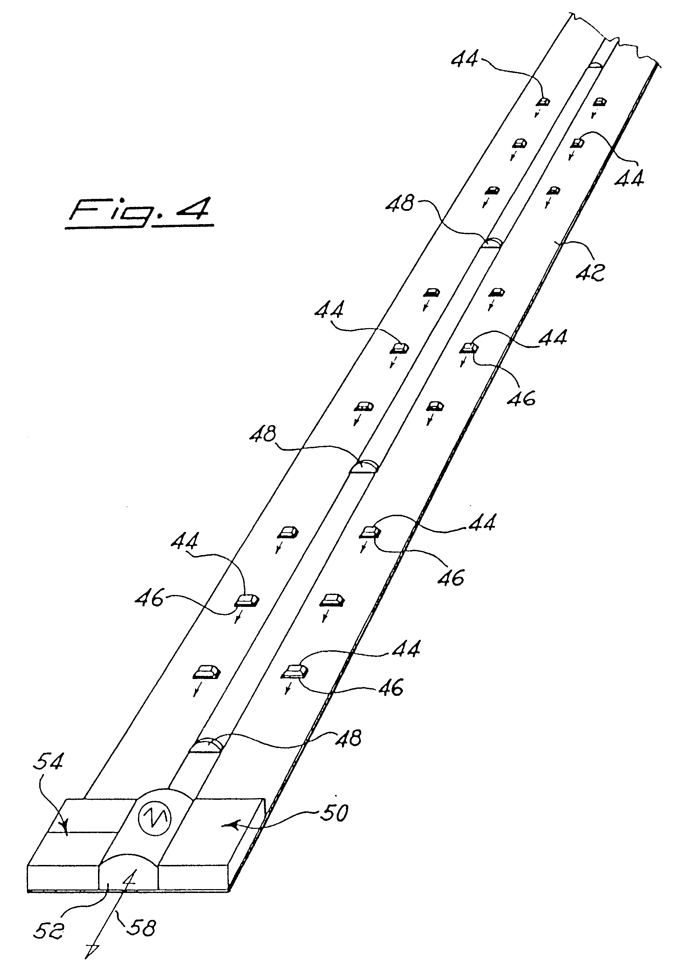

As previously mentioned, the LEDs can be fed by the electrical energy produced by solar cells or photovoltaic batteries. Such a system constitutes one of the versions that completes this invention.
The roadmarking strip (42) shown in Fig.4 has solar cells (44) applied to it. They are arranged next to retroreflecting elements, shown in the figure as catadioptric prisms (46), which are the retroreflecting units that are the object of the applicant's aforementioned USA Patent No. 31,291. The catadioptric prisms are shown here arranged below the solar cells but, as previously mentioned, they can be arranged next to the solar cells, or even spaced therefrom without exceeding the limits of this invention.

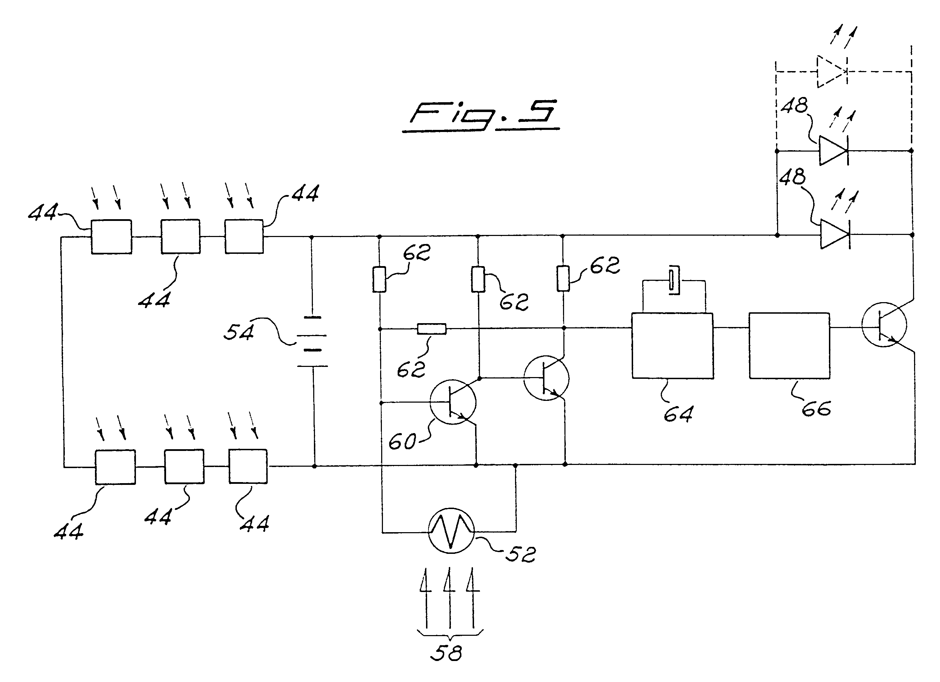

The arrangement of the LEDs (48) is only indicative by way of example, and in no way restrictive.
The control box (50), which contains a light detector (52), one or more batteries (54) and timers, is schematically represented and located at the beginning end of the marking strip (42). The contents of the box (50) are connected together as shown, by way of example, in Fig.5. This shows how the solar cells (44) feed the batteries (54) to keep them at full charge.
The light detector (52) consists essentially of a photoelectric cell, or a phototransistor, and a microswitch. When the light detector (52) receives the light from the headlights (58) of an approaching motor vehicle, the circuit that feeds current from the batteries (54) to the LEDs (48) is closed by means of the appropriate transfer unit (60) and resistors (62). The closure of the circuit may not be immediate nor continuous. In fact, a timer (64) can be provided to cause a time lag between the time the beam from the headlights (58) strikes the light detector (52) and the LEDs (48) light up. Furthermore, another timer (66) can be provided to cause the light emitted by the LEDs (48) to blink on and off.
Both the light detector (52) and timers (64) & (66) are readily available on the market, as are also the photovoltaic batteries, which are usually made of laminated silicon crystals. The LEDs are of the type that draw a small amount of current. It is underlined that the circuit shown in Fig.5 is only an example, and this invention can be realized using any other type of circuit that connects up the various elements regarding this invention so as to give the same results.

## Claims

1. A system comprising a prefabricated tape-like composite roadway marking material for horizontal road-marking purposes, in the form of a composite marking strip, comprising in combination:
a) a continuous base strip (8, 12, 13, 42) to be applied to the surface of the roadway; and
b) a series of transparent protruding elements (7, 48) located in predetermined positions distributed along said base strip, said protruding elements housing light emitting means; and
c) a photosensitive device on said base strip;
**characterized by**
said photosensitive device receiving light from a traffic signal by means of optical fibers to cause said light emitting means on said base strip to produce a colour corresponding to the colour of the traffic light.

2. A system according to Claim 1 and in which said photosensitive device actuates a microswitch via an amplifier.

3. A system according to Claim 2 and in which said microswitch when closed permits said light emitting means to be energized by an electrical power supply.

4. A system according to Claim 3 and including a control switch comprising a timer to cause said light emitting means to operate in a blinking mode.

5. A system according to any one of Claims 1 to 4 in which said light emitting means are Light Emitting Diodes.

6. A system according to any one of Claims 1 to 5 wherein said base strip includes a photoelectric cell responsive to light beams coming from the headlights of oncoming motor vehicles, the arrangement being such that when said photoelectric cell is activated by said light beams it permits said light emitting means to be energized.

## Patentansprüche

1. System mit einem vorgefertigten bandartigen Strassenmarkierungs-Verbundstoff zum horizontalen Markieren von Straßen, in Form eines Markierungs-Verbundbandes, umfassend in Kombination:
a) ein auf der Fahrbahnoberfläche anzubringendes, Ununterbrochenes Trägerband (8, 12, 13, 42),
b) eine Reihe von vorstehenden durchsichtigen Elementen (7, 48), die an vorherbestimmten, längs des Trägerbandes verteilten Stellen angeordnet sind und lichtemittierende Mittel enthalten; und
c) eine auf dem Trägerband vorgesehene lichtempfindliche Einrichtung,
**dadurch gekennzeichnet, daß**
die lichtempfindliche Einrichtung über Lichtleitfasern von einer Verkehrssignalanlage kommendes Licht empfängt und auf Grund dessen die auf dem Trägerband vorhandene lichtemittierende Einrichtung zum Erzeugen einer der Farbe des Verkehrssignals entsprechenden Farbe veranlaßt.

2. System nach Anspruch 1, in dem die photoempfindliche Einrichtung über einen Verstärker einen Mikroschalter betätigt.

3. System nach Anspruch 2, in dem der Mikroschalter im geschlossenen Zustand ein Speisen der lichtemittierenden Einrichtung durch eine elektrische Stromquelle gestattet.

4. System nach Anspruch 3 mit einem einen Zeitgeber enthaltenden Steuerschalter, der bewirkt, daß die lichtemittierende Einrichtung im Blinkbetrieb arbeitet.

5. System nach einem der Ansprüche 1 bis 4, in dem die lichtemittierende Einrichtung aus Leuchtdioden besteht.

6. System nach einem der Ansprüche 1 bis 5, in dem das Trägerband eine Photozelle aufweist, die auf Lichtstrahlenbündel vom den Scheinwerfern von sich nähernden Kraftfahrzeugen anspricht, wobei die Anordnung so getroffen ist, daß die durch die Lichtstrahlenbündel aktivierte Photozelle eine Speisung der lichtemittierenden Einrichtung gestattet.

## Revendications

1. Système comprenant un matériel de marquage de route, préfabriqué, composite et en genre de bande, à des fins d'un marquage horizontal de route, sous la forme d'un ruban de marquage composite, comprenant en combinaison :
a) un ruban de base continu (8, 12, 13, 42) à appliquer à la surface de la route, et
b) une série d'éléments saillants transparents (7, 48) situés dans des positions prédéterminées réparties le long du ruban de base, les éléments saillants logeant des moyens d'émission de lumière, et
c) un dispositif photosensible sur le ruban de base,
caractérisé en ce que le dispositif photosensible reçoit de la lumière d'un signal lumineux de circulation au moyen de fibres optiques afin d'amener les moyens émettant de la lumière précités, du ruban de base, à produire une couleur correspondant à la couleur du signal de circulation.

2. Système suivant la revendication 1, caractérisé en ce que ledit dispositif photosensible actionne par l'intermédiaire d'un amplificateur un microcommutateur.

3. Système suivant la revendication 2, caractérisé en ce que, lorsqu'il est fermé, le microcommutateur permet aux moyens émettant de la lumière d'être alimentés par une alimentation en énergie électrique.

4. Système suivant la revendication 3, caractérisé en ce qu'il comporte un commutateur de commande comprenant un temporisateur afin d'amener les moyens émettant de la lumière à fonctionner dans un mode de clignotement.

5. Système suivant l'une quelconque des revendications 1 à 4, caractérisé en ce que les moyens émettant de la lumière sont des diodes électroluminescentes.

6. Système suivant l'une quelconque des revendications 1 à 5, caractérisé en ce que le ruban de base comporte une cellule photoélectrique sensible aux faisceaux lumineux en provenance des phares de véhicules automobiles qui arrivent, l'agencement étant tel que, lorsque la cellule photoélectrique est activée par lesdits faisceaux lumineux, elle permet aux moyens émettant de la lumière d'être alimentés.
